# EUROPEAN PATENT APPLICATION

(11) **EP 4 220 521 A1**
(43) Date of publication of application: **02.08.2023**
(21) Application number: 21879817.1
(22) Date of filing: 15.09.2021
(51) Int. Cl.: G06Q 30/02, H04L 67/02

(54) **PROGRAM, BROWSER, AND IMAGE FILE**

(30) Priority: 12.10.2020 JP 2020171949
(71) Applicant: TESNOLOGY Inc., Minato-ku Tokyo 107-0052 (JP)
(72) Inventor: KONDO Katsuhiko, Tokyo 107-0052 (JP)
(74) Representative: Schröer, Gernot H.
(86) International application number: PCT/JP2021/033910
(87) International publication number: WO 2022/080075

(57) **Abstract**

A program is added to a browser for displaying a web page, and when an attached URL is included in an image file included in the web page, the program causes a computer to perform a function to access the attached URL.

## Description

### Technical Field

The present invention relates to techniques that extend functions related to image files.

### Background Art

By adding comments to images captured with a smartphone or other device, it is possible to record feelings and situations at the timing of capture. PTL 1 discloses a technique that associates image data with comments and registers them on an online photo storage server.

### Related Art List

Patent Literature 1 (PTL1): JP 6485529 B

### Summary

### Technical Problem

With the technique described in PTL 1, a user is able to add comments to each image data at the timing of uploading the image data.

However, there is a problem that a third person must subscribe to an online storage server service in order to view the comments added by the user who captured the image.

Thus, managing information associated with image data on a server increases the processing load of the server and decreases the convenience of others.

The present invention has been achieved on the basis of recognition of the aforementioned problems and a main object thereof is to enhance the convenience of functions related to image files. Another object is to reduce dependency on servers.

### Solution to problem

A program according to a certain aspect of the present invention is a program added to a browser that displays a web page, wherein when an attached URL (Uniform Resource Locator) is included in an image file included in the web page, the program causes a computer to perform a function to access the attached URL.

A browser according to another aspect of the present invention is a browser that displays a web page, wherein when an attached URL is included in an image file included in the web page, the browser causes a computer to perform a function to access the attached URL.

A program according to another aspect of the present invention is a program added to a browser that displays a web page, wherein when an attached program is included in an image file included in the web page, the program causes a computer to perform a function to execute the attached program.

A browser according to another aspect of the present invention is a browser that displays a web page, wherein when an attached program is included in an image file included in the web page, the browser causes a computer to perform a function to execute the attached program.

A program according to another aspect of the present invention is a program added to a browser that displays a web page, wherein the program causes a computer to perform: a function to read the personal information stored in the computer operating the browser; and a function to display an attached comment when the attached comment is included in an image file included in the web page and the attached comment is related to the personal information.

A browser according to another aspect of the present invention is a browser that displays a web page, wherein the browser causes a computer to perform: a function to read personal information stored in the computer operating the browser; and a function to display an attached comment when the attached comment is included in an image file included in the web page and the attached comment is related to the personal information.

A program according to another aspect of the present invention is a program added to a browser that displays a web page, wherein the program causes a computer to perform: a function to read personal information stored in the computer operating the browser; and a function to display product information when the product information is included in an image file included in the web page and the product information is related to the personal information.

A browser according to another aspect of the present invention is a browser that displays a web page, wherein the browser causes a computer to perform: a function to read personal information stored in the computer operating the browser; and a function to display product information when the product information is included in an image file included in the web page and the product information is related to the personal information.

An image file according to another aspect of the present invention is an image file including image data and an attached program executed in a browser, wherein the attached program causes a computer to perform: a function to read information stored in the computer operating the browser; and a function to display contents based on the read information.

A program according to another aspect of the present invention is a program for generating image files to be provided on the Web, wherein the program causes a computer to perform: a function to capture an image to generate an image file including an attached data area; a function to set an identifier of an image provider in the attached data area of the image file; and a function to set an attached URL that specifies a hyperlink destination of the image file in the attached data area of the image file.

### Advantageous Effects of Invention

The present invention increases the convenience of functions related to image files. In addition, the present invention has the effect of reducing dependency on servers.

### Brief Description of Drawings

FIG. 1 illustrates an example of a configuration of an advertising system.
FIG. 2 illustrates display examples of a product list page of a magazine site.
FIG. 3 illustrates display examples of a product introduction page of a magazine site.
FIG. 4 illustrates display examples of a posted article page on a social networking service (SNS) site.
FIG. 5 illustrates display examples of a product purchase page of a manufacturer site.
FIG. 6 illustrates a flow of a user posting an image file to an SNS site.
FIG. 7 illustrates display examples of an SNS article page on an SNS site.
FIG. 8 illustrates display examples of a product purchase page of a manufacturer site.
FIG. 9 is a data structure diagram of an image file.
FIG. 10 is a functional block diagram of a user terminal.
FIG. 11 is a functional block diagram of a plug-in.
FIG. 12 is a functional block diagram of an image file creation application.
FIG. 13 is a flowchart illustrating processes of a plug-in.
FIG. 14 is a flowchart illustrating processes of a plug-in.
FIG. 15 is a flowchart illustrating processes of an attached program.
FIG. 16 is a functional block diagram of an SNS server.
FIG. 17 illustrates an example of actual data.
FIG. 18 illustrates an overview of a business model.
FIG. 19 is a functional block diagram of an advertisement mediator server.

### Description of Embodiments

### EMBODIMENT

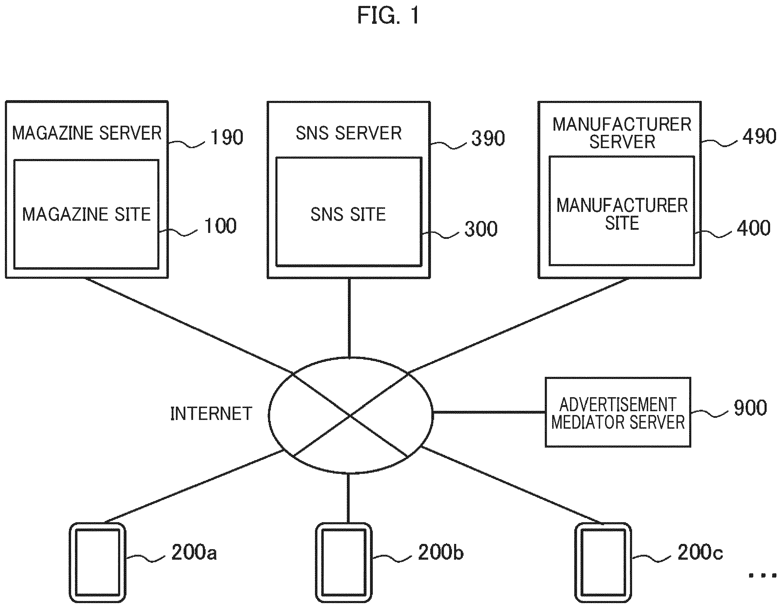

FIG. 1 illustrates an example of a configuration of an advertising system.

Connected to the Internet are a magazine server 190, an SNS server 390, a manufacturer server 490, and an advertisement mediator server 900. The magazine server 190, the SNS server 390, the manufacturer server 490, and the advertisement mediator server 900 are all Web servers.

The magazine server 190 provides a magazine site 100 for publishing magazine articles on a web page. The SNS server 390 provides an SNS site 300 for publishing SNS articles posted by users who are SNS members as web pages. The manufacturer server 490 provides a manufacturer site 400 for e-commerce of products manufactured by the manufacturer.

The magazine site 100 provides magazine articles that feature manufacturer products. The featured products may be from the same manufacturer or from different manufacturers. Although one manufacturer is described here as an example, multiple manufacturers may participate in the system. The following is an example where the product is shirts, but the product may be any product. Further, it is also possible to introduce services other than products. In this case, a service provider may be substituted for the manufacturer.

As discussed below, magazine articles include images of products. In this embodiment, the image file of a product is made to have attached data (digital data). The attached data will be described later. The image file of the product not only conveys the image of the product by the image, but also has the role of providing auxiliary control over the operation of a user terminal 200 by the attached data.

User terminals 200a to 200c (e.g., smartphones, tablet terminals, and personal computers) are capable of being connected to the magazine server 190, the SNS server 390, the manufacturer server 490, and the advertisement mediator server 900 via the Internet. The user terminals 200a to 200c, etc. are collectively referred to as "user terminals 200" or individually referred to as a "user terminal 200" when not specifically distinguished.

Users use the user terminal 200 to view magazine articles, view SNS articles, post SNS articles by themselves, and purchase products from manufacturers. Users may also advertise products from manufacturers by posting their own SNS articles. In this case, the attached data of the image file included in the SNS article also provides auxiliary control over the operation of the user terminal 200 that refers to the SNS article. Details of these operations are described below.

The user terminal 200 stores personal information including various contents. The personal information may be designed to be confidential or to restrict its use by outsiders. The personal information stored by each user terminal 200 is also used to provide auxiliary control over the operation of the user terminal 200.

It is assumed that the user terminal 200 includes a browser, and that the browser has added a plug-in according to this embodiment. This plug-in is responsible for a portion of the operation of the user terminal 200 in this embodiment.

An advertisement mediator, who is the operator of the advertisement mediator server 900, mediates between manufacturers and magazine companies or between manufacturers and posters of SNS articles to support the advertising campaign of products. The advertisement mediator server 900 has a role such as calculating the advertising fee, which is a reward for a magazine company or a poster of an SNS article.

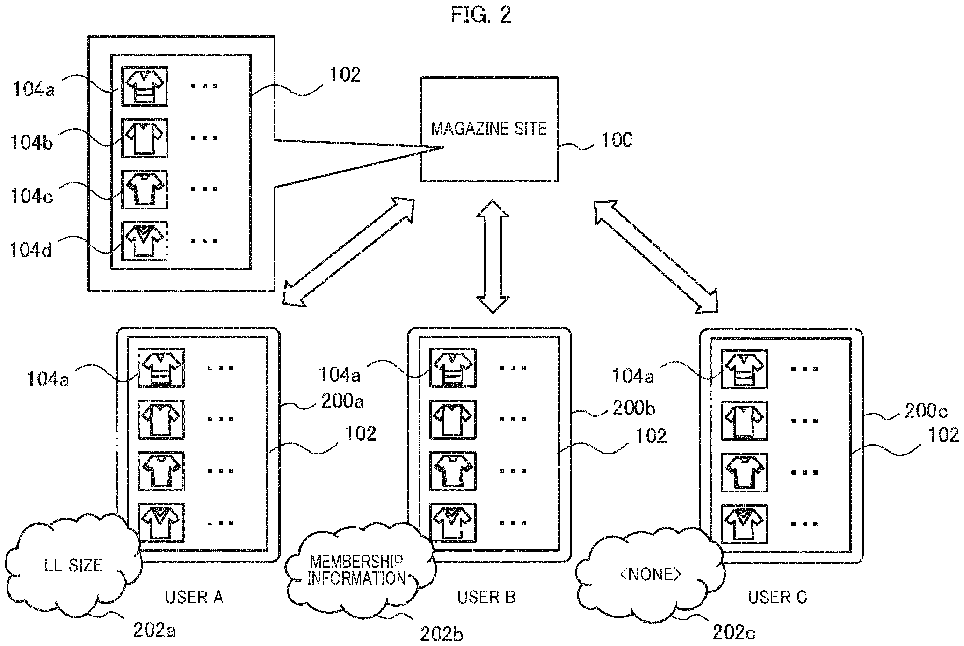

FIG. 2 illustrates display examples of a product list page 102 of the magazine site 100.

The magazine site 100 provides product list page 102. The product list page 102 displays small product images 104a to 104d of captured products and brief descriptions for multiple products. Here, products of the same manufacturer may be listed, or products of different manufacturers may be listed. The first product is of a manufacturer operating the manufacturer server 490.

Personal information 202a stored in the user terminal 200a includes information of LL size as the clothing size of User A. Personal information 202b stored in the user terminal 200b includes the member number and an identification number of the manufacturer operating the manufacturer server 490 as membership information of User B. That is, User B is a member of the manufacturer operating the manufacturer server 490. It is assumed that the personal information 202c stored in the user terminal 200c does not include information related to this product.

FIG. 2 illustrates that user terminals 200a to 200c each access the magazine site 100, and the product list page 102 is displayed by a browser. At this stage, the displays of user terminals 200a to 200c are all the same.

It is then assumed that Users A to C each tap on the first small product image 104a included in the product list page 102.

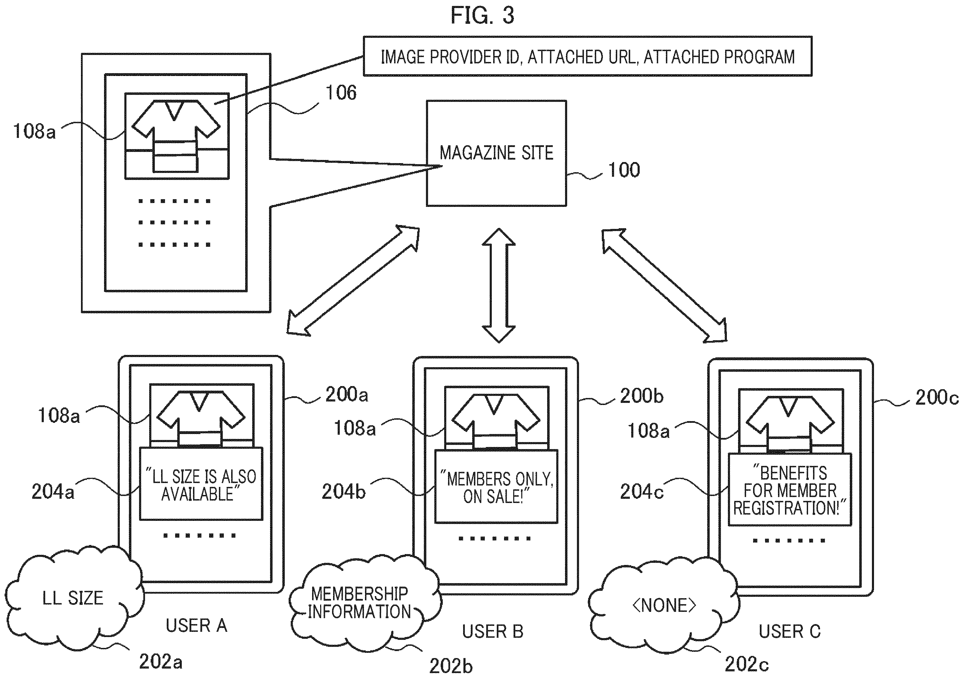

FIG. 3 illustrates display examples of a product introduction page 106 of the magazine site 100.

The first small product image 104a included in the product list page 102 links to the product introduction page 106. The product introduction page 106 displays a large product image 108 of a captured product and a detailed description for the first product on the product list page 102.

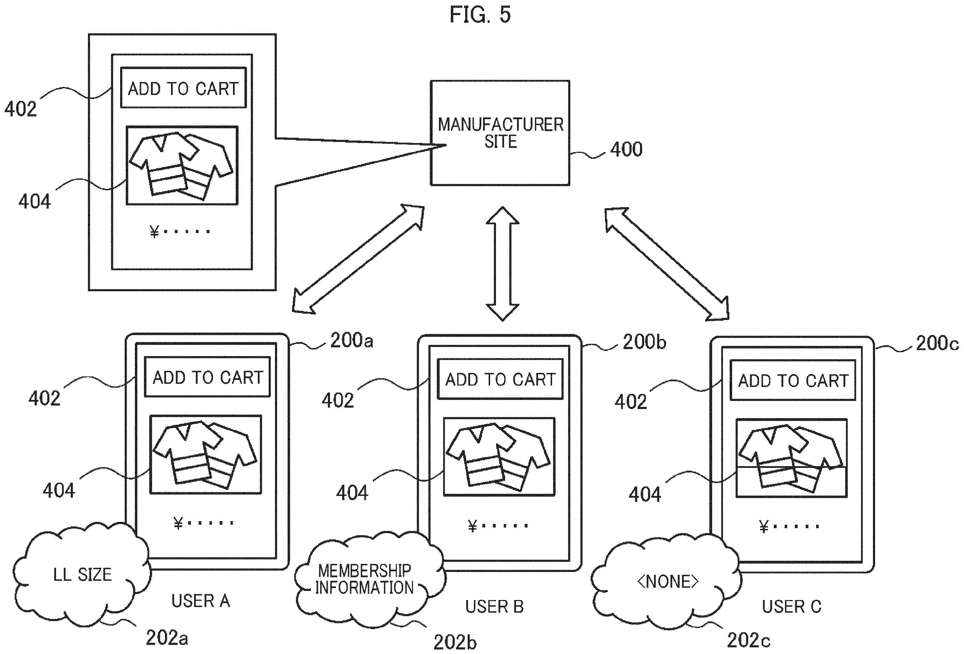

For the large product image 108, an image provider ID, an attached URL, and an attached program are set as attached data. The image provider ID is information identifying the person who provided this image and is data controlled by the advertisement mediator. The image provider ID of this large product image 108 is an ID assigned to the magazine company. The attached URL indicates the storage location of the web page on the web linked from this image. The attached URL of this large product image 108 corresponds to a product purchase page on the manufacturer site 400. The product purchase page on the manufacturer site 400 will be described later with reference to FIG. 5.

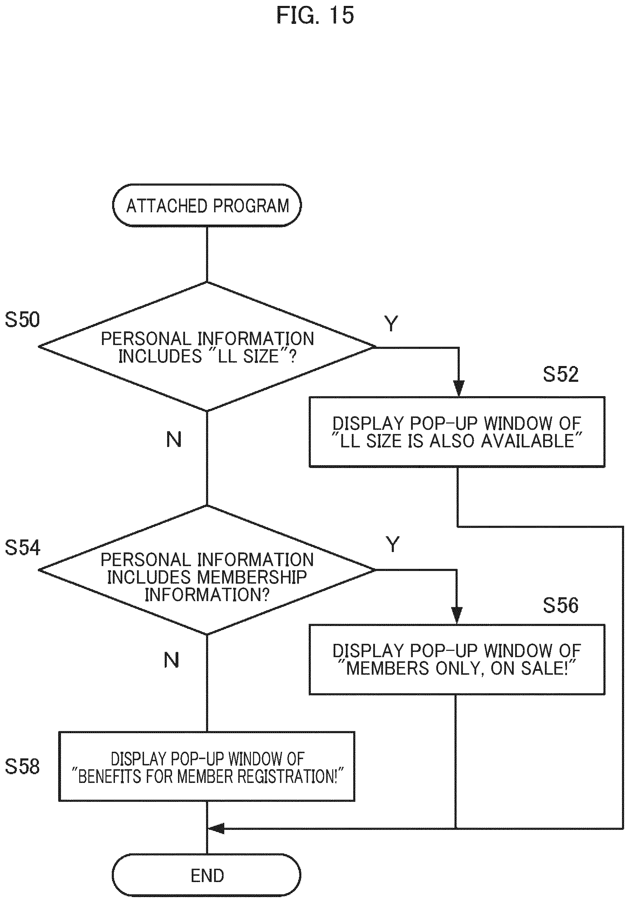

The attached program is executed in the browser by plug-in processing. The attached program may be written in any language and may be written, e.g., in a Java script. In this case, the attached program is loaded and executed by a Java script engine of the browser. Processing performed in accordance with the attached program of this large product image 108 will be described later with reference to FIG. 15.

In any of the user terminals 200a to 200c, tapping the first small product image 104a on the product list page 102 switches the display to the product introduction page 106. The user terminal 200a refers to the information of LL size for clothing included in the personal information 202a to display a message that says "LL SIZE IS ALSO AVAILABLE" in a pop-up window 204a. In this way, User A knows that this product (shirt) has a size suitable for her. The user terminal 200b refers to the membership information of the manufacturer operating the manufacturer server 490 included in the personal information 202b to display a message that says "MEMBERS ONLY, ON SALE!" in a pop-up window 204b. Thus, User B knows that this product (shirt) is able to be purchased as a sale item. Since the personal information 202c does not include the clothing size or membership information, the user terminal 200c displays a message that says "BENEFITS FOR MEMBER REGISTRATION!" in a pop-up window 204c to prompt the user to register as a member of the manufacturer operating the manufacturer server 490. In this way, User C knows that he/she can receive a benefit by registering as a member of the manufacturer of this product (shirt).

In this way, each user is presented with a message that triggers their interest in the product. Therefore, users are more likely to be motivated to access the distributor of that product, which helps to promote sales and advertising for the manufacturer.

When Users A to C tap the pop-up windows 204a to 204c, the pop-up windows 204a to 204c disappear. The entire of a posted article page 302 then becomes visible.

In this state, when the large product image 108a of the product introduction page 106 is tapped, the display switches to the product purchase page of the manufacturer site 400 shown in FIG. 5. FIG. 5 will be described later.

Next, consider that the large product image 108a on the product introduction page 106 is spread across the Web. Images of particularly popular products can easily be spread across the Web. In this embodiment, the spreading of images by a third party is also used as an act of spreading advertising. Here, we describe an example in which the large product image 108a on the product introduction page 106 is copied by a user and reprinted in a post article on SNS.

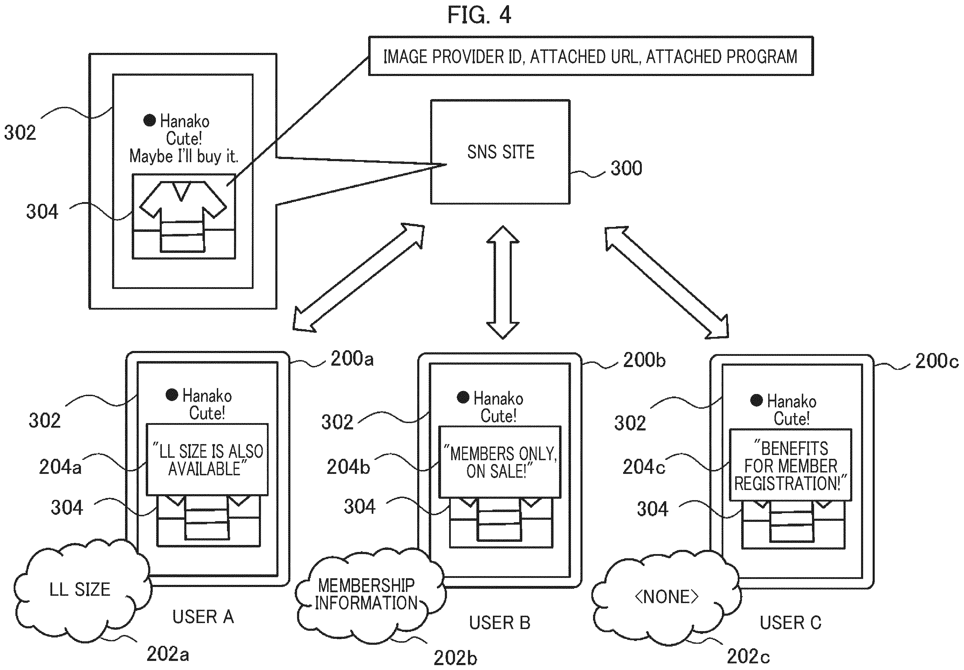

FIG. 4 illustrates display examples of the posted article page 302 on the SNS site 300.

The SNS site 300 publishes the posted article page 302 posted by a user. The large product image 108a on the product introduction page 106 is reprinted as a large product image 304 on the posted article page 302. The image file of the large product image 304 includes attached data similar to that of the large product image 108a. "Hanako" displayed on the posted article page 302 is the screen name of the user who posted the article. The text entered by the poster, "Cute! Maybe I'll buy it." also appears on the posted article page 302.

FIG. 4 illustrates that user terminals 200a to 200c each access the SNS site 300, and the SNS article page 302 is displayed by a browser.

The user terminal 200a refers to the information of LL size for clothing size included in the personal information 202a to display a message that says "LL SIZE IS ALSO AVAILABLE" in a pop-up window 204a. In this way, User A knows that this product (shirt) has a size suitable for her. The user terminal 200b refers to the membership information of the manufacturer operating the manufacturer server 490 included in the personal information 202b to display a message that says "MEMBERS ONLY, ON SALE!" in a pop-up window 204b. Thus, User B knows that this product (shirt) is able to be purchased as a sale item. Since the personal information 202c does not include the clothing size or membership information, the user terminal 200c displays a message that says "BENEFITS FOR MEMBER REGISTRATION!" in a pop-up window 204c to prompt the user to register as a member of the manufacturer operating the manufacturer server 490. In this way, User C knows that he/she can receive a benefit by registering as a member of the manufacturer of this product (shirt). In other words, the posted article page 302 functions similarly to the product introduction page 106 described in connection with FIG. 3 and has the same effect.

When Users A to C tap the pop-up windows 204a to 204c, the pop-up windows 204a to 204c disappear. The entire posted article page 302 then becomes visible.

In this state, when the large product image 304 of the posted article page 302 is tapped, the display switches to the product purchase page of the manufacturer site 400 shown in FIG. 5.

FIG. 5 illustrates display examples of a product purchase page 402 of the manufacturer site 400.

The manufacturer site 400 provides the product purchase page 402. The product purchase page 402 is similar to the product purchase page in general e-commerce. The product purchase page 402 displays, among other things, a purchasable product image 404 and its price, and includes a button to add the product to a shopping cart. This allows manufacturers to sell their products directly to end users.

The product purchase page 402 is similarly displayed in each of the user terminals 200a to 200c. The subsequent purchase procedure is the same as the conventional technology.

The following is an example of a user who has purchased a product personally advertising the product by taking a picture of the product and posting the image file of the taken picture on the SNS site 300.

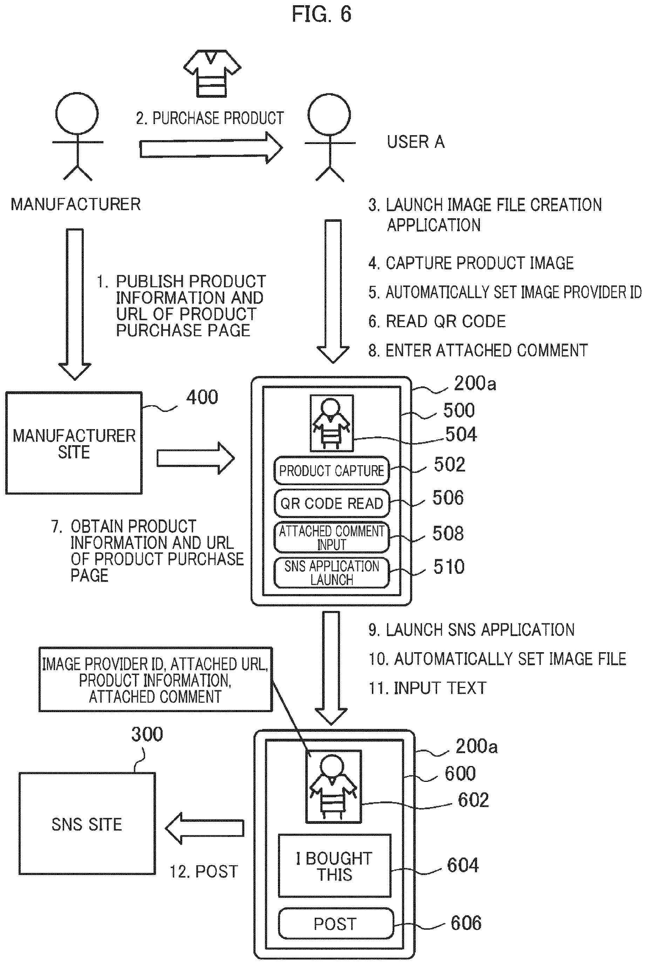

FIG. 6 illustrates the flow of a user posting an image file to the SNS site 300.

The manufacturer publishes product information and the URL of the product purchase page 402 for each product on the manufacturer site 400 for users to advertise the product.

It is assumed that User A has received the purchased product. In order to create an image file to be posted to the SNS, User A launches an image file creation application in the user terminal 200a. The image file creation application may be a browser extension.

When the image file creation application is launched, an image file creation screen 500 is displayed on the user terminal 200a. The image file creation screen 500 includes a product capture button 502, a QR code (registered trademark) reader button 506, an attached comment input button 508, and an SNS application launch button 510. The image file creation screen 500 also includes an area for displaying a user captured image 504.

When User A taps the product capture button 502, a camera function is activated. User A then captures the purchased product. In this example, User A wears a product (shirt) and captures the image. The image file is thus created, and the captured image is displayed on the image file creation screen 500 as the user captured image 504.

The image file creation application automatically sets an image provider ID, provided in advance by the advertisement mediator, as part of the attached data of the image file. The image provider ID is stored in the image file creation application.

Next, when User A taps the QR code reading button 506, the camera function is activated again. User A then scans a QR code attached to the purchased item. For example, the QR code is printed on a statement of delivery or a product label. The QR code represents a URL for obtaining public information (product information and the URL of the product purchase page 402) about the purchased products from the manufacturer site 400. The image file creation application accesses the URL represented by the QR code to obtain the product information and the URL of the product purchase page 402. The image file creation application then sets the product information as part of the attached data in the image file. In addition, the image file creation application sets the URL of the product purchase page 402 as an attached URL as part of the attached data. In this example, a message that says "LIGHT BLUE ALSO AVAILABLE" is set as the product information. The QR code is an example of graphic codes. RFID (radio frequency identification) tags or bar codes may be used instead place of QR codes.

The image file creation application may also obtain public information without using QR codes. For example, the public information may be transmitted from the manufacturer site 400 to the user terminal 200a by tapping a public information acquisition button corresponding to the purchased product in the purchased product history included in My Page of User A.

Next, when User A taps the attached comment input button 508, a text input screen is displayed, and the image file creation application sets the text freely entered by User A as an attached comment to a part of the attached data. In this example, the text "I think I can wear it for sports" is set as the attached comment. At this stage, the attached data of the image file includes the image provider ID, attached URL, product information, and attached comments.

Then, when User A taps the SNS application launch button 510, an SNS application is launched and an SNS posting screen 600 of the SNS application is displayed. The image file creation application automatically sets the image file to the SNS application. Alternatively, the image file creation application may store the image file in a picture folder and retrieve the image file from the picture folder by user operation to attach the image file in the SNS application.

The SNS posting screen 600 includes an area that displays a captured image 602 of an image file captured by automatic setting or user operation, a text input area 604, and a post button 606. User A enters text to be included in the SNS post article and taps the post button 606.

Upon tapping of the post button 606, the SNS application sends an SNS post article including the image file and the text to the SNS site 300. The operation in SNS site 300 is similar to the conventional technology.

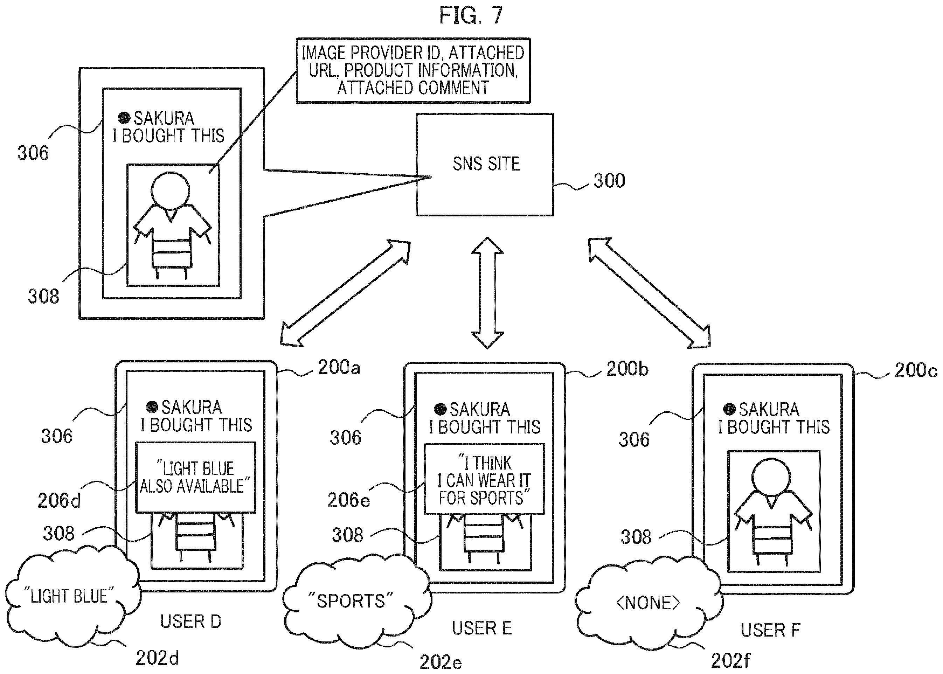

FIG. 7 illustrates display examples of the SNS article page 306 of the SNS site 300.

The SNS site 300 publishes the SNS article page 306 posted by User A. The image of the image file generated by the image file creation application is displayed on the SNS article page 306 as the user captured image 308. "Sakura" displayed on the SNS article page 306 is the screen name of User A. The text entered by User A, "I bought this" also appears on the SNS article page 306.

FIG. 7 illustrates that user terminals 200a to 200c each access the SNS site 300, and the posted article page 302 is displayed by the browser.

Personal information 202d stored in the user terminal 200d includes "light blue" as a favorite color of User D. Personal information 202e stored in the user terminal 200e includes "sports" as a hobby of User E. It is assumed that the personal information 202f stored in the user terminal 200f does not include contents related to product information or attached comments.

The user terminal 200d refers to the "light blue" of the favorite color included in the personal information 202 and displays a pop-up window 206d including a message that says "LIGHT BLUE ALSO AVAILABLE" as a message of product information related thereto. The user terminal 200e refers to "sports" of the hobby included in the personal information 202 and displays a pop-up window 206e including text "I think I can wear it for sports" as an attached comment related thereto. The user terminal 200f does not display the pop-up window 206 because the personal information 202 includes no information related to the product information or the attached comment.

When Users D and E tap pop-up windows 206d and 206e, respectively, the pop-up windows 206d and 206e disappear. The entire SNS article page 306 then becomes visible.

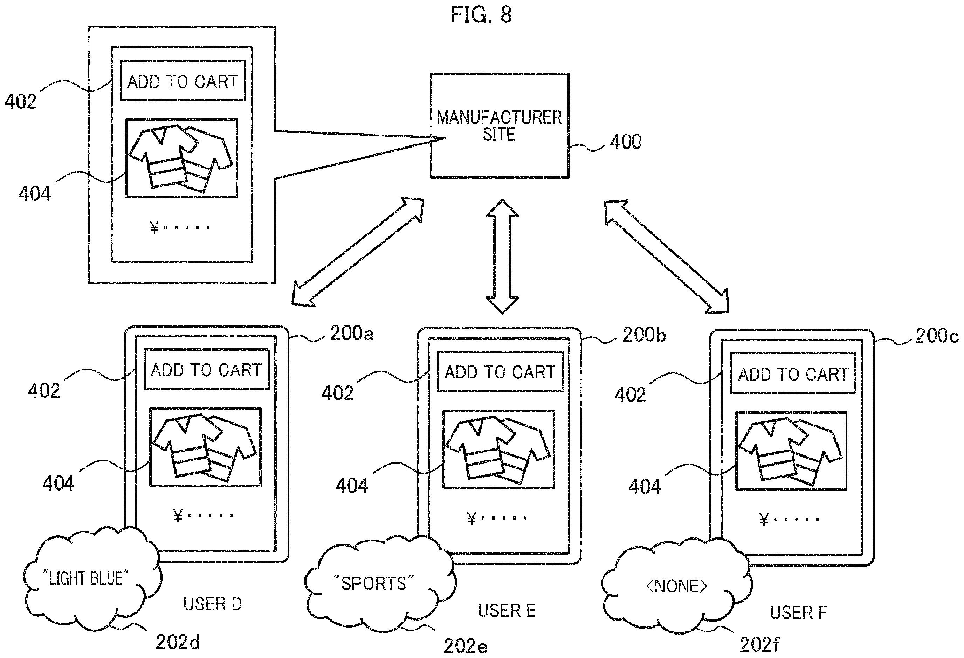

In this state, when the user captured image 308 of the SNS article page 306 is tapped, the display switches to the product purchase page 402 of the manufacturer site 400 shown in FIG. 8.

FIG. 8 illustrates display examples of the product purchase page 402 of the manufacturer site 400.

As explained in connection with FIG. 5, the manufacturer site 400 provides the product purchase page 402. As in the case of FIG. 5, the product purchase page 402 is displayed in all of the user terminals 200d to 200f. The subsequent purchase procedure is the same as the conventional technology.

In this way, the user is directed from the SNS article page 306 with the image taken personally to the product purchase page 402 of the manufacturer site 400. A beautiful or interesting picture, even if taken by a private person, often attracts the viewer's attention, which has a great advertising effect. The pop-up window 204 can also be used to draw the viewer's attention to a product that matches his or her personal preferences. This concludes the overview. Processing details will be described below.

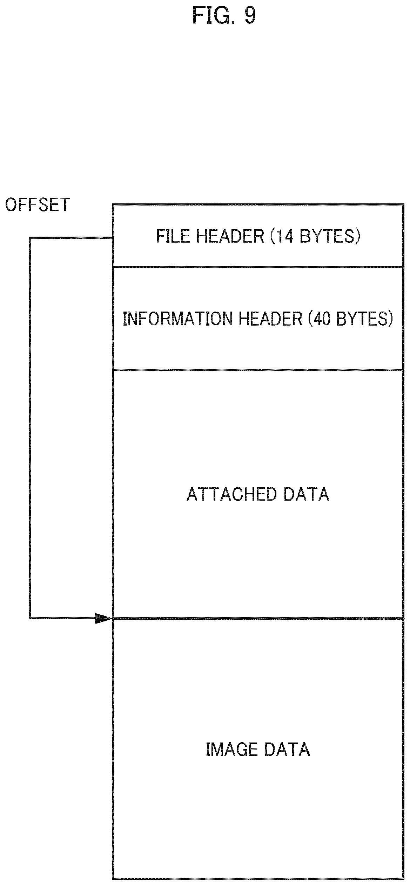

FIG. 9 is a data structure diagram of an image file.

The Windows Bitmap format is shown as example of an image file. A Windows Bitmap format image file has a 14-byte file header and a 40-byte information header. The file header has an offset that indicates the head position of the image data area. In this example, the image data area is located away from the information header. The area between the information header and the image data area is used as the area for the attached data.

The attached data is inclusive data including a variety of information. The offset indicating the head position of the image data area is specified by the sum of the size of the file header, the size of the information header, and the size of the attached data. In the case of a file format in which an area for attached data is provided after the image data area, the area for the attached data may be provided after the image data area.

The attached data may include image provider ID, attached URL, attached program, product information and attached comments. Their type and range are capable of being specified by sandwiching them between tags. When an image provider ID is included in the attached data, e.g., the statement "<img_prv> I01100 </img_prv>" is included in the attached data. "I01100" is the image provider ID. When an attached URL is included in the attached data, e.g., the statement "<att_url> mmm.jp/p/P0105 </att_url>" is included in the attached data. "mmm.jp/p/P0105" is the attached URL. When an attached program is included in the attached data, e.g., the statement "<att_pro> ... </att_pro>" is included in the attached data. The part indicated by "..." is a program description code (e.g., source code such as Java scripts). A script file (e.g., Java script files) may be set as the program description code. When product information is included in the attached data, e.g., the statement "<com_inf> "light blue is also available" </com_inf>" is included in the attached data. The portion "light blue is also available" is the product information. For example, product information may identify attributes or characteristics of the product and may include material, manufacturing method, production area, handling method, brand, and price, and the like. When an attached comment is included in the attached data, e.g., the statement "<com_cmnt> "I think I can wear it for sports" </com_cmnt>" is included in the attached data. The portion "I think I can wear it for sports" is the attached comment.

Although an example is shown in which various types of information may be placed in an arbitrary position of the attached data in an arbitrary size, a predetermined format may be provided for the attached data to store predetermined information of a predetermined size in a predetermined area.

Although an example of an image file in Windows Bitmap format is shown, the image file may be in OS/2 Bitmap format. In addition, an image file in a format other than the bit-map format may be used as long as an area for attached data is provided before the image data by setting an offset indicating the head position of the area for image data as described above. Alternatively, an area for attached data may be provided after the image data by specifying the final offset of the area for the image data or the size of the image data. Even in this case, an image file in a format other than the bit-map format can also be used. As long as this condition is met, image files in formats such as JPEG, PNG, GIF, TIFF, SVG or PSD may be used.

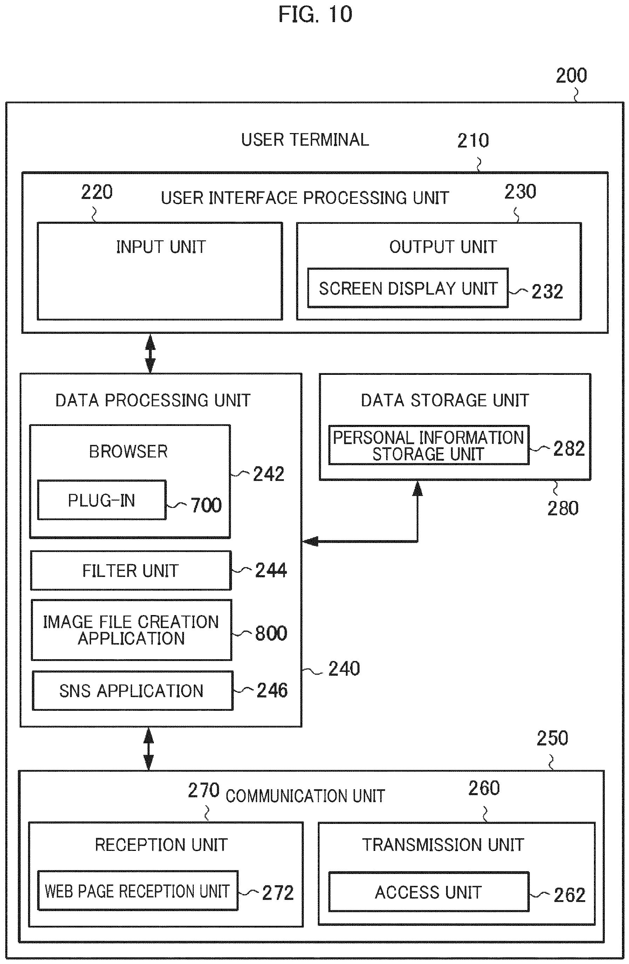

FIG. 10 is a functional block diagram of the user terminal 200.

The user terminal 200 includes a user interface processing unit 210, a data processing unit 240, a communication unit 250 and a data storage unit 280. The user interface processing unit 210 accepts operations from the user via, e.g., a mouse or touch panel and also handles user interface processing such as image display and audio output. The communication unit 250 performs communication processing over the network. The data storage unit 280 stores various types of data. The data processing unit 240 performs various processing based on the data acquired by the communication unit 250 and the data stored in the data storage unit 280. The data processing unit 240 also functions as an interface for the user interface processing unit 210, the communication unit 250, and the data storage unit 280.

The user interface processing unit 210 includes an input unit 220 that accepts operation input by user and an output unit 230 that presents information to the user. The output unit 230 includes a screen display unit 232 for displaying various screens.

The data processing unit 240 includes a browser 242, a filter unit 244, an image file creation application 800 and an SNS application 246.

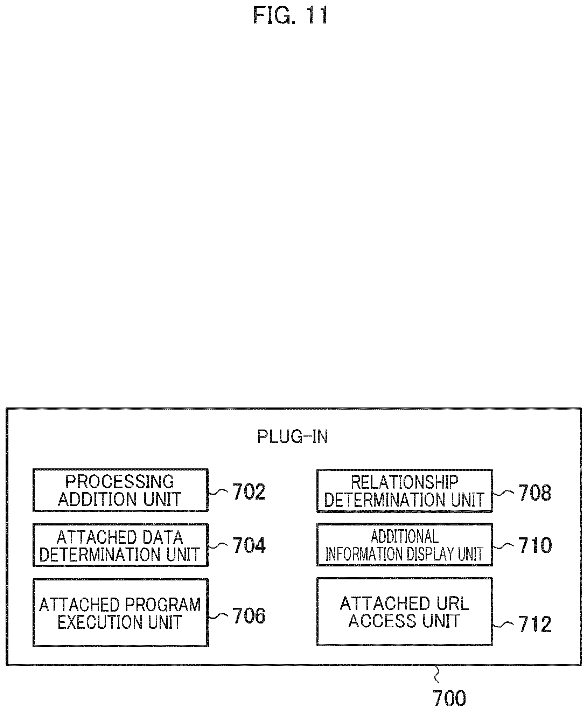

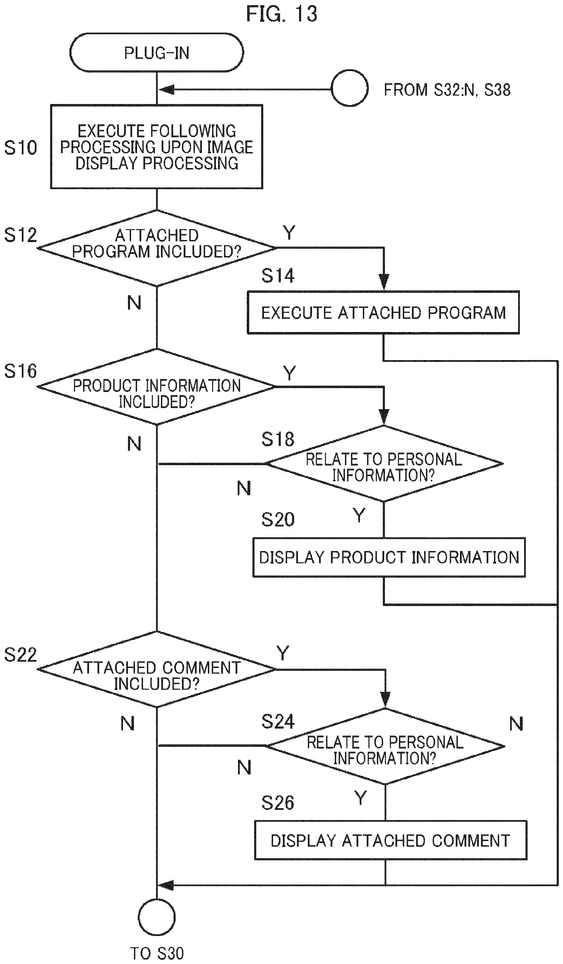

The browser 242 is a general-purpose web browser capable of retrieving and displaying web pages from any web site. The browser 242 has the functions of a common web browser. A plug-in 700 is added to the browser 242. The plug-in 700 is a program that a user adds to the browser 242. The plug-in 700 is described below with respect to FIGS. 11 and 13.

The filter unit 244 performs processing to select information used by the plug-in 700 and the attached program from the personal information 202 of the user. For example, the filter unit 244 may perform a filtering process that excludes financial institutions and health-related information. The filtering process of the filter unit 244 may be omitted.

The image file creation application 800 is an application for a user to create an image file in which attached data is added to data of an image captured by the user. The image file creation application 800 may be a native application or a web application. Also, the image file creation application 800 may be an extension of the browser 242.

The SNS application 246 is a regular SNS application. In particular, it uses features related to posting on SNS. The SNS application 246 may be a native application or a web application.

In addition, there may be provided an encryption unit that encrypts plaintext personal information 202 and stores it in a personal information storage unit 282 and a decryption unit that reads and decrypts the encrypted personal information 202 from the personal information storage unit 282. The encryption and decryption processes may be omitted.

The illustration assumes a state in which the browser 242, the plug-in 700, and the image file creation application 800 are running and are shown as included in the data processing unit 240 for purposes of explanation; however, these programs are stored in the non-volatile data storage unit 280. The browser 242, the plug-in 700, and the image file creation application 800 may also have functions as the user interface processing unit 210, the data storage unit 280, and the communication unit 250.

The communication unit 250 includes a transmission unit 260 for transmitting data and a reception unit 270 for receiving data.

The transmission unit 260 includes an access unit 262 that accesses the specified URL. The reception unit 270 includes a web page reception unit 272 that receives data of the web page as response to accessing the URL of the web page. The access unit 262 and the web page reception unit 272 may also operate as part of the browser 242, plug-in 700, and the image file creation application 800.

The data storage unit 280 includes the personal information storage unit 282 that stores the personal information 202 of a user. Any type and content of information may be included in the personal information 202. The personal information 202 of a user may be registered by the user or may be set automatically by various programs.

FIG. 11 is a functional block diagram of the plug-in 700.

The plug-in 700 implements functions corresponding to a processing addition unit 702, an attached data determination unit 704, an attached program execution unit 706, a relationship determination unit 708, an additional information display unit 710, and an attached URL access unit 712. These functional blocks are implemented by executing the program of the plug-in 700 on a processing unit (e.g., CPU (central processing unit) and MPU (micro processing unit)).

The processing addition unit 702 interrupts predetermined processing of a part of the plug-in 700 at a predetermined timing of standard processing in the browser 242. An attached data determination unit 704 determines whether or not predetermined information (e.g., image provider ID, attached URL, attached program, product information, and attached comments) is included in the attached data.

The attached program execution unit 706 executes an attached program included in the attached data. The attached program execution unit 706 may be an entity of a program execution engine (e.g., a proprietary interpreter) or may perform processing to call a program execution engine (e.g., a ready-made interpreter, such as the Java script engine) included in the browser 242. The attached program execution unit 706 detects the description "<att_pro> ... </att_pro>" included in the attached data, and extracts the Java script corresponding to "...", for example. Further, the attached program execution unit 706 passes the extracted Java script to the Java script engine to cause the Java script engine to execute processing by the Java script.

The relationship determination unit 708 determines whether information (e.g., product information and attached comments) included in the attached data of the image file is related to the personal information 202 of the user. For example, the relationship determination unit 708 extracts characteristic words from the product information and attached comments, determines whether or not the same word is included in the personal information 202, and determines that there is a relationship if the same word is included. The relationship determination unit 708 may also determine that a relationship exists if not only the same words are included, but also similar words are included. Similarities may be determined either by using a thesaurus dictionary or by the degree of approximation of the word vectors for distributed representation of meaning. The method of determining the similarity relationship is optional and may be conventional. Characteristic words are words other than commonly used words, such as prepositions, "is," "do," "I," and "information," which alone do not refer to attributes or characteristics of the user. The relationship determination unit 708 may perform filtering and/or decoding processing when reading the personal information 202 from the personal information storage unit 282.

The additional information display unit 710 displays additional information related to the image of the image file. In this example, the information included in the attached data of the image file (e.g., product information and attached comments) is displayed in a pop-up window. The additional information display unit 710 may display additional information in a form other than a pop-up window. Alternatively, an additional information output unit (not shown) for audio output of the additional information may be provided to output the additional information as audio information instead of or in addition to the processing of the additional information display unit 710.

The attached URL access unit 712 accesses an attached URL included in the attached data of the image file.

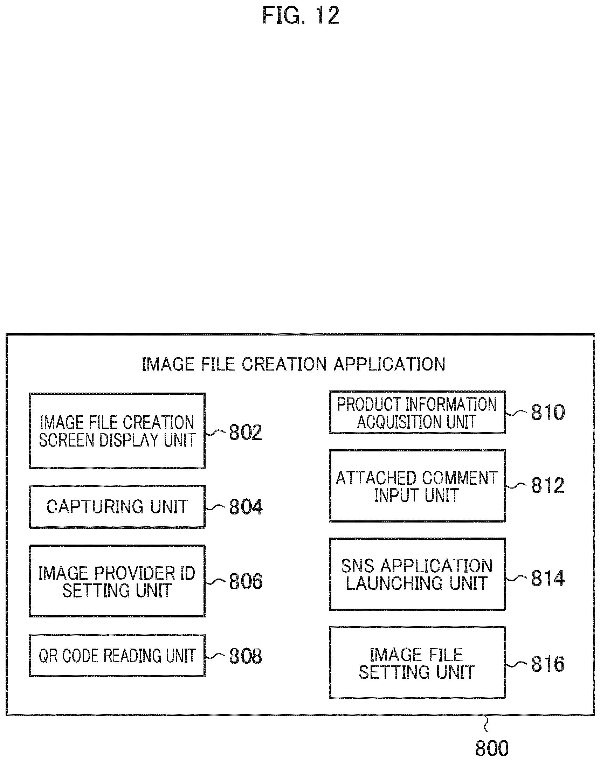

FIG. 12 is a functional block diagram of the image file creation application 800.

The image file creation application 800 implements functions corresponding to an image file creation screen display unit 802, a capturing unit 804, an image provider ID setting unit 806, a QR code reading unit 808, a product information acquisition unit 810, an attached comment input unit 812, an SNS application launching unit 814, and an image file setting unit 816. These functional blocks are implemented by executing the program of the image file creation application 800 on a processing (e.g., CPU and MPU).

The image file creation screen display unit 802 displays an image file creation screen 500 after launching the image file creation application 800. When the product capture button 502 is tapped, the capturing unit 804 activates the camera function and generates an image file (see FIG. 9) of a predetermined format including data of an image captured by the camera function and an attached data area.

The image provider ID setting unit 806 causes the non-volatile data storage unit 280 to hold the image provider ID given in advance by the advertisement mediator, and sets this image provider ID in the attached data of the generated image file. When the QR code reading button 506 is tapped, the QR code reading unit 808 activates the camera function to read the QR code and obtain data stored in the QR code.

The product information acquisition unit 810 accesses the URL stored in the QR code to acquire public information (product information and the URL of the product purchase page 402) from the manufacturer site 400. The product information acquisition unit 810 may acquire public information (product information and the URL of the product purchase page 402) from the manufacturer site 400 by user operation on the web page of the manufacturer site 400. Then, the product information acquisition unit 810 sets the product information in the attached data and sets the URL of the product purchase page 402 as the attached URL in the attached data.

When the attached comment input button 508 is tapped, the attached comment input unit 812 displays a text input screen to accept text input by the user. Further, the attached comment input unit 812 sets the input text as an attached comment in the attached data.

When the SNS application launch button 510 is tapped, the SNS application launching unit 814 launches the SNS application and causes the SNS application to display the SNS posting screen 600. The image file setting unit 816 automatically sets the image file to the post article in the SNS application.

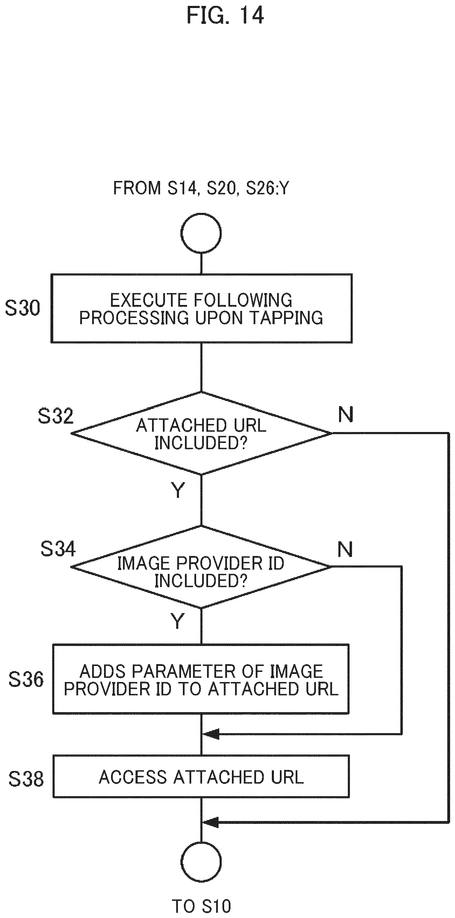

FIGS. 13 and 14 are flowcharts illustrating processes of the plug-in 700.

The processes of the plug-in 700 include two waiting points, S10 and S30 shown in FIG. 14. That is, the timing determination in S10 and S30 shown in FIG. 14 are alternately repeated, and when either timing is reached, interrupt processing is performed.

After the image display processing of an image file in a predetermined format (in this example, a bitmap file) in the browser 242, the processing addition unit 702 executes the processing of S12 to S26 (S10). In other words, the processing addition unit 702 interrupts the standard processing of the browser 242 and adds the processing of S12 to S26.

The attached data determination unit 704 determines whether an attached program is included in attached data of the image file (S12). When an attached program is included in the attached data (Y in S12), the attached program execution unit 706 executes the attached program (S14). Waiting for completion of the execution of the attached program, the processing addition unit 702 resumes the standard processing following displaying the image of the image file in the browser 242. Then, the processing addition unit 702 continues the waiting in S10 and S30 shown in FIG. 14.

When the attached data does not include the attached program (N in S12), the attached data determination unit 704 determines whether product information is included in the attached data of the image file (S16). When product information is included in the attached data (Y in S16), the relationship determination unit 708 determines whether the product information is related to the personal information 202 (S18).

When the product information is related to the personal information 202 (Y in S18), the additional information display unit 710 displays a pop-up window 206d (see FIG. 7) representing the product information (S20). Upon detecting a tap to the pop-up window 206d, the additional information display unit 710 closes the pop-up window 206d. The processing addition unit 702 resumes the standard processing following displaying the image of the image file in the browser 242 and continues the waiting in S10 and S30 shown in FIG. 14.

If the attached data does not include product information (N in S16) or if the product information is not related to the personal information 202 (N in S18), the attached data determination unit 704 determines whether an attached comment is included in the attached data of the image file (S22).

When an attached comment is included in the attached data (Y in S22), the relationship determination unit 708 determines whether the attached comment is related to the personal information 202 (S24).

When the attached comment is related to the personal information 202 (Y in S24), the additional information display unit 710 displays a pop-up window 206e (see FIG. 7) representing the attached comment (S26) . Upon detecting a tap to the pop-up window 206e, the additional information display unit 710 closes the pop-up window 206e. Then, the processing addition unit 702 resumes the standard processing following displaying the image of the image file in the browser 242 and continues the waiting in S10 and S30 shown in FIG. 14.

If the attached data does not include attached comments (N in S22) or if the attached comments do not relate to the personal information 202 (N in S24), the processing addition unit 702 resumes the standard processing following displaying the image of the image file in the browser 242 and continues the waiting in S30 shown in S10 and FIG. 14.

FIG. 14 will be explained hereinafter. The processing addition unit 702 performs processing of S32 to S38 at the timing when the image area of the image file is tapped (S30). That is, the processing addition unit 702 let the processing of S32 to S38 interrupt the standard processing of the browser 242.

The attached data determination unit 704 determines whether an attached URL is included in attached data of the image file (S32). When an attached URL is not included in the attached data (N in S32), the processing addition unit 702 restarts the standard processing of the browser 242 at the timing when the image area of the image file is tapped, and continues the waiting in S10 and S30 shown in FIG. 14.

When the attached data includes the attached URL (Y in S32), the attached data determination unit 704 further determines whether the image provider ID is included in the attached data of the image file (S34).

When the image provider ID is not included in the attached data (N in S34), the attached URL access unit 712 accesses the attached URL (S38). Then, the processing addition unit 702 resumes the standard processing in the browser 242 and continues the waiting in S10 and S30 shown in FIG. 14.

When the image provider ID is included in the attached data (Y in S34), the attached URL access unit 712 adds the parameter of the image provider ID to the attached URL (S36) and accesses the attached URL with the parameter of the image provider ID (S38). Then, the processing addition unit 702 resumes the standard processing in the browser 242 and continues the waiting in S10 and S30 shown in FIG. 14.

FIG. 15 is a flowchart illustrating an example of the processes of the attached program.

The processing of the attached program described here is an example, and other processing may be performed.

The attached program execution unit 706 determines whether the personal information 202 includes a character string of "LL size" (S50) . When a character string similar to the "LL size" is included, the attached program execution unit 706 may assume that a character string of the "LL size" is included.

When the personal information 202 includes a character string of "LL size" (Y in S50), the attached program execution unit 706 displays a pop-up window 204a (see FIGS. 3 and 4) representing a message that says "LL SIZE IS ALSO AVAILABLE" (S52). Upon detecting a tap to the pop-up window 204a, the attached program execution unit 706 closes the pop-up window 204a. This completes the processing of the attached program.

When the personal information 202 does not include a character string of "LL size" (N in S50), the attached program execution unit 706 determines whether or not the personal information 202 includes membership information of the manufacturer operating the manufacturer server 490 (S54).

When membership information of the manufacturer operating the manufacturer server 490 is included in the personal information 202 (Y in S54), the attached program execution unit 706 displays a pop-up window 204b (see FIGS. 3 and 4) representing a message that says "MEMBERS ONLY, ON SALE!" (S56). Upon detecting a tap to the pop-up window 204b, the attached program execution unit 706 closes the pop-up window 204b. This completes the processing of the attached program.

When the personal information 202 does not include membership information of the manufacturer operating the manufacturer server 490 (N in S54), the attached program execution unit 706 displays a pop-up window 204c (see FIGS. 3 and 4) representing a message that says "BENEFITS FOR MEMBER REGISTRATION!" (S58). Upon detecting a tap to the pop-up window 204c, the attached program execution unit 706 closes the pop-up window 204c. This completes the processing of the attached program. If the personal information 202 does not include membership information of the manufacturer operating the manufacturer server 490 (N in S54), the processing of the attached program may be completed without displaying anything.

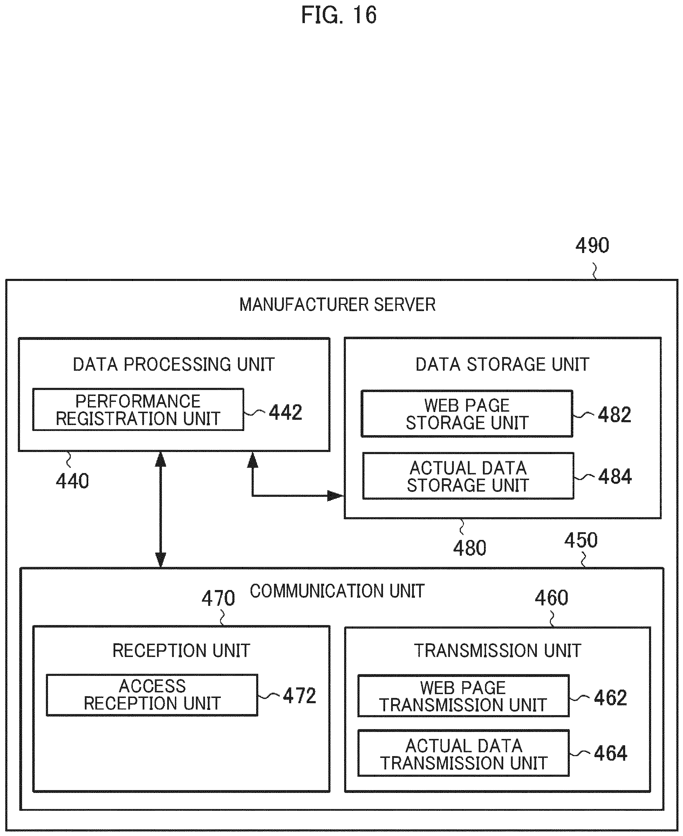

FIG. 16 is a functional block diagram of the manufacturer server 490.

The manufacturer server 490 includes a data processing unit 440, a communication unit 450, and a data storage unit 480. The communication unit 450 performs communication processing over the network. The data storage unit 480 stores various types of data. The data processing unit 440 performs various processes based on the data acquired by the communication unit 450 and the data stored in the data storage unit 480. The data processing unit 440 also functions as an interface for the communication unit 450 and the data storage unit 480.

The manufacturer server 490 has a functional block of normal processing for e-commerce services. The functional blocks that are the focus of this embodiment are described below.

The communication unit 450 includes a transmission unit 460 for transmitting data and a reception unit 470 for receiving data.

The reception unit 470 includes an access reception unit 472 that receives access to the URL of the manufacturer site 400.

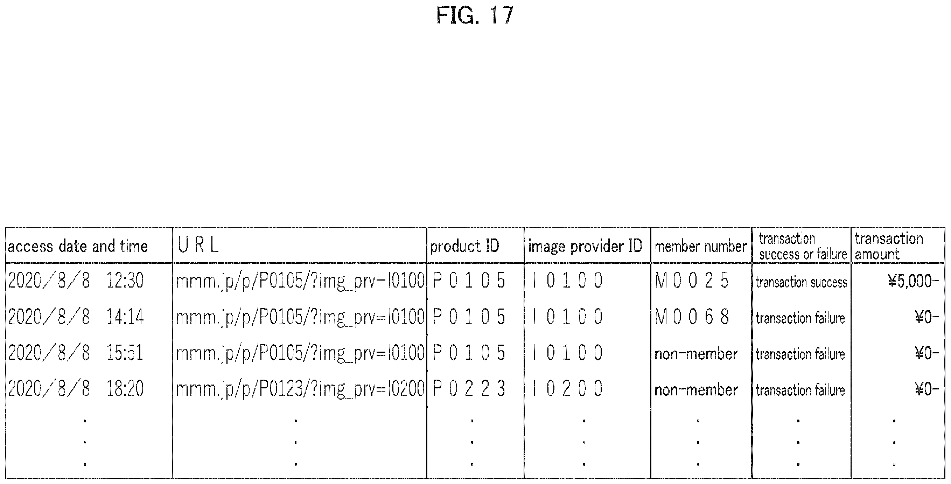

The transmission unit 460 includes a web page transmission unit 462 that transmits web page data in response to access to the URL of the manufacturer site 400, and an actual data transmission unit 464 that transmits actual data indicating the performance related to the access to the advertisement mediator server 900. The actual data will be discussed later in relation to FIG. 17.

The data storage unit 480 includes a web page storage unit 482 for storing data of web pages provided by the manufacturer site 400 and an actual data storage unit 484 for storing actual data.

Regarding access to the URL of the manufacturer site 400, the data processing unit 440 includes a performance registration unit 442 that registers information about the access in the actual data.

FIG. 17 illustrates an example of the actual data.

It has records for each access to the URL of the product purchase page 402 of the manufacturer site 400. The records store access date and time, URL, product ID, image provider ID, member number, transaction success or failure, and transaction amount in association. Accessed URLs may have additional parameters. "img_prv - I0100" is a parameter indicating the image provider ID. The product ID can be identified from the URL of the product purchase page 402 being accessed. In this example, the product ID "P0105" can be identified from "/P0105/" included in the URL. The member number is identified by sign-in at the manufacturer site 400. The success or failure of the transaction and the transaction amount can be identified from the operation records and sales data on the manufacturer site 400.

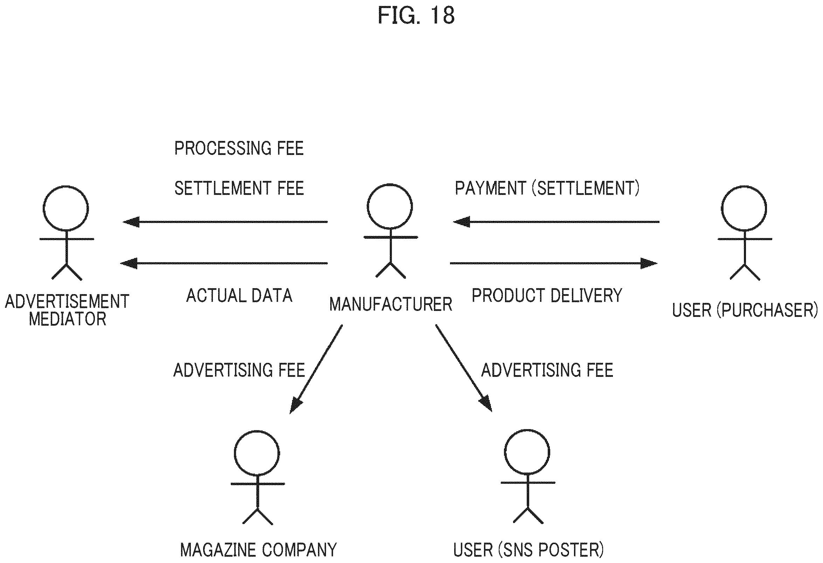

FIG. 18 illustrates an overview of a business model.

This shows an example of a business model according to the present invention. When a user purchases a product on the manufacturer site 400, the user pays the purchase price by e.g., electronic payment and bank transfer. The manufacturer delivers the product to the user who purchased the product. An advertisement mediator may collect the purchase price and deliver the product to the user.

The manufacturer pays the advertisement mediator a processing fee for the advertising system and a settlement fee for closing the transaction. In addition, if the advertisement mediator is acting as a delivery agent, the manufacturer may pay an additional delivery fee to the advertisement mediator.

The manufacturer also sends actual data to advertisement mediator. When a plurality of manufacturers participate in the advertising system, the advertisement mediator collects actual data from the plurality of manufacturers.

In this business model, collaborators who advertise a product, such as magazine companies and SNS posters, are paid an advertising fee as compensation for their cooperation in the advertisement. The advertisement mediator may aggregate the advertising fees paid by each manufacturer to calculate the total advertising fees to be received by each collaborator. The advertisement mediator may also act on behalf of the manufacturer to pay the advertising fees.

The advertising fee for each collaborator may be determined by multiplying the number of image provider IDs of the collaborator included in the actual data (i.e., the number of accesses) by a predetermined unit price. Alternatively, only for access that has led to a successful transaction, the total transaction value may be aggregated and the advertising fee may be determined by multiplying the total transaction value by a predetermined percentage.

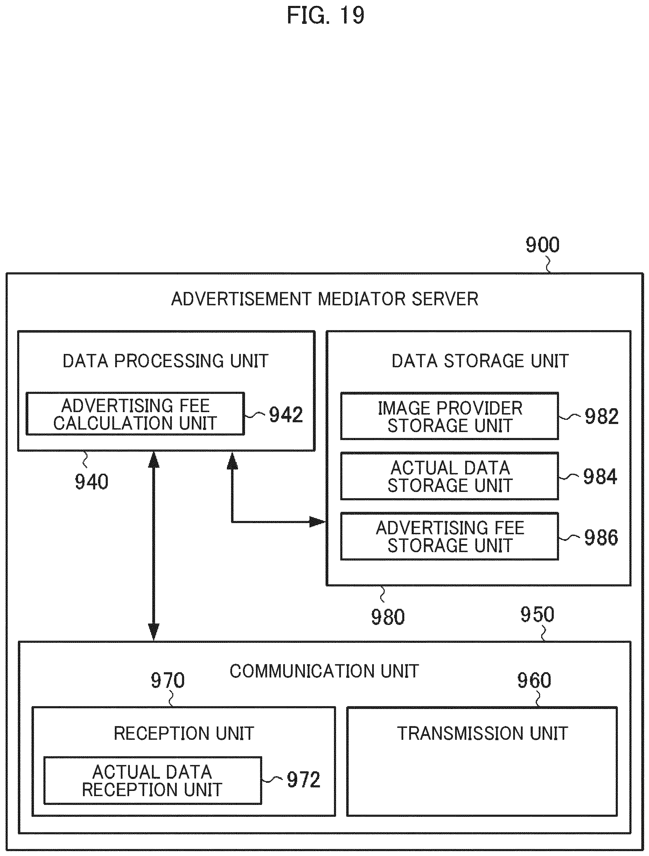

FIG. 19 is a functional block diagram of the advertisement mediator server 900.

The advertisement mediator server 900 includes a data processing unit 940, a communication unit 950, and a data storage unit 980. The communication unit 950 performs communication processing over the network. The data storage unit 980 stores various types of data. The data processing unit 940 performs various processes based on the data acquired by the communication unit 950 and the data stored in the data storage unit 980. The data processing unit 940 also functions as an interface for the communication unit 950 and the data storage unit 980.

The communication unit 950 includes a transmission unit 960 for transmitting data and a reception unit 970 for receiving data. The reception unit 970 includes an actual data reception unit 972 that receives actual data from the manufacturer server 490.

The data storage unit 980 includes an image provider storage unit 982 that stores data of the image provider including the image provider ID, an actual data storage unit 984 that stores actual data, and an advertising fee storage unit 986 that stores advertising fees paid to the image provider.

The data processing unit 940 includes an advertising fee calculation unit 942 that calculates the advertising fee for each image provider. Advertising fees may be paid by conventional methods, such as bank transfers.

In the above example, the description is made on the assumption that the plug-in 700 is added to the browser 242, but in the user terminal 200 using the browser 242 without the plug-in 700, the standard processing is performed on the image file with the attached data as in the case of the image file without the attached data. That is, the pop-up window 204, 206 described above is not displayed, nor is the URL of the product purchase page 402 accessed. No errors or other malfunctions occur. That is, whether or not to add the plug-in 700 is up to the user's free will as to whether or not he or she wants to utilize the additional features provided by the plug-in 700.

### Modifications

Although an example has been described in which the image provider ID is included in the attached data separately from the attached URL, the image provider ID may be set as a parameter of the attached URL. In this case, the plug-in 700 may access by using an attached URL with parameters of the image provider ID included in the attached data.

The functions of the plug-in 700 described above may be included in standard functions of the browser 242. That is, the browser 242 may implement the functional blocks of the plug-in 700 shown in FIG. 11. In this case, the browser 242 includes a program to be executed by a processing unit to implement the functional blocks shown in FIG. 11. In this case, the above process can be performed without adding the plug-in 700 to the browser 242.

A magazine company may use the image file creation application 800 described above to generate image files for publication on the magazine site 100. For this purpose, the SNS posting function may be excluded from the image file creation application 800. In any case, the image file creation application 800 facilitates the generation of image files with attached data. The image file creation application 800 may have a function to convert an image file without an attached data area into an image file with an attached data area.

A digital signature may be added to the image file. In an image file creation application, a digital signature generation unit may be provided that generates a digital signature in an image file with attached data and adds the digital signature to the image file with attached data. This can prevent tampering with the image file. In particular, this helps to prevent the impersonation of image providers. It also prevents abuse of rewriting the attached URL that is the link destination.

A tap operation is shown as an example of a predetermined user operation, but the operation may be other touch operations. For example, the operation may be a long tap, a double tap, or a flick. Further, the predetermined user operation may be a mouse operation or a touchpad operation. For example, the predetermined user operation may be a click and a double click, among other operations. The predetermined user operation may also be a keyboard operation, such as focusing on an image and pressing the enter key.

Sites that provide web pages including image files with attached data may be other than the magazine site 100 and the SNS site 300. An image file including attached data may be included in the web page of the manufacturer site 400. Web pages including image files with attached data may be provided on general Web sites other than the manufacturer site 400 such as e-commerce sites, bulletin board sites, review sites, summary sites, blog sites, video posting sites, paid video sites, TV company sites, radio company sites, newspaper company sites, and other corporate and group sites.

In the example shown in the above, the URL of the product purchase page 402 of the manufacturer site 400 is used as an attached URL to direct the user terminal 200 to access the manufacturer site 400. Alternatively, the URL of a web page (e.g., a home page or signature page) other than the product purchase page 402 of the manufacturer site 400 may be used as an attached URL to direct the user terminal 200 to that web page.

The advertising requester does not have to be a manufacturer. The advertising requester may be a sole proprietor, a retailer, a wholesaler, a department store, a supermarket, a convenience store, or a general e-commerce company. In such a case, instead of the manufacturer site 400, the same processing as that for the web page of the manufacturer site 400 is performed for the web page of the sole proprietor site, retail store site, wholesaler site, department store site, supermarket site, convenience store site, or general electronic commerce company site (example of the web site). The business model described above, such as delivering products and paying advertising fees, may be the same as for manufacturers. Alternatively, a business model may be created which is tailored to meet the needs of the advertising requester.

The present invention is not limited to the embodiments described above and modifications thereof, and any component thereof can be modified and embodied without departing from the scope of the invention. The components described in the embodiments and modifications can be combined as appropriate to form various other embodiments. Some components may be omitted from the components presented in the embodiments and modifications.

The program and browser in one aspect of the present invention causes a computer to perform a function to determine whether or not an attached URL is included in an image file included in the web page and a function to access the attached URL when an attached URL is included in the image file. This makes it easier to obtain information and opportunities related to the image file and data such as a predetermined web page.

The program and browser in another aspect of the present invention causes a computer to perform a function to determine whether an attached program is included in an image file included in the web page and a function to execute the attached program when an attached program is included in the image file, so that the functions related to the image file can be easily extended.

The program and browser in another aspect of the present invention causes a computer to perform a function to determine whether or not an attached comment is included in the image file included in a web page, a function to read the personal information stored in the computer operating the browser, a function to determine whether or not the attached comment is related to the personal information when an attached comment is included in the image file, and a function to display the attached comment when the attached comment is related to the personal information, so that comments can be disclosed to users who are likely to be interested in the comment on the image.

The program and browser in another aspect of the present invention causes a computer to perform a function to determine whether or not product information is included in the image file included in the web page, a function to read the personal information stored in the computer for operating the browser, a function to determine whether or not the product information is related to the personal information when product information is included in the image file, and a function to display the product information when the product information is related to the personal information, so that it is possible to disclose the product information to the user who is likely to be interested in the product captured as the image.

An image file in another aspect of the present invention is an image file including image data and an attached program executed in a browser, and the attached program causes the computer to perform a function to read information stored in the computer operating the browser and a function to display content based on the read information, so that it is possible to display contents corresponding to the environment in which the image file is viewed.

The program according to another aspect of the present invention is a program for generating an image file to be provided to the Web, and the program causes a computer or a mobile terminal to perform a function to capture an image to generate an image file including an attached data area, a function to set an identifier of an image provider in the attached data area of the image file, and a function to set an attached URL that specifies a hyperlink destination of the image file in the attached data area of the image file, so that wherever the image is located, the source of the image can be identified and the data related to the image can be accessed.

## Claims

1. A program added to a browser that displays a web page, wherein
when an attached URL is included in an image file included in the web page, the program causes a computer or a mobile terminal to perform a function to access the attached URL.

2. The program according to claim 1, wherein the program accesses the attached URL at a timing when a predetermined user operation is performed on a display area of an image of the image file.

3. The program according to claim 1 or 2, wherein
when an identifier of an image provider is included in the image file, the program further causes the computer or the mobile terminal to perform a function to add the identifier of the image provider to the attached URL,
thereby accessing the attached URL to which the identifier of the image provider is added.

4. The program according to claim 1 or 2, wherein when an identifier of an image provider is added to the attached URL, the program accesses the attached URL to which the identifier of the image provider is added.

5. A browser that displays a web page, wherein
when an attached URL is included in an image file included in the web page, the browser causes a computer or a mobile terminal to perform a function to access the attached URL.

6. The browser according to claim 5, wherein the browser accesses the attached URL at a timing when a predetermined user operation is performed on a display area of an image of the image file.

7. The browser according to claim 5 or 6, wherein
when an identifier of an image provider is included in the image file, the browser further causes the computer or the mobile terminal to perform a function to add the identifier of the image provider to the attached URL,
thereby accessing the attached URL to which the identifier of the image provider is added.

8. The browser according to claim 5 or 6, wherein when an identifier of an image provider is added to the attached URL, the browser accesses the attached URL to which the identifier of the image provider is added.

9. A program added to a browser that displays a web page, wherein
when an attached program is included in an image file included in the web page, the program causes a computer or a mobile terminal to perform a function to execute the attached program.

10. The program according to claim 9, wherein the attached program is executed after an image of the image file is displayed.

11. A browser that displays a web page, wherein
when an attached program is included in an image file included in the web page, the browser causes a computer or a mobile terminal to perform a function to execute the attached program.

12. The browser according to claim 11, wherein the attached program is executed after an image of the image file is displayed.

13. A program added to a browser that displays a web page, wherein the program causes a computer or a mobile terminal to perform:
a function to read personal information stored in the computer or the mobile terminal operating the browser; and
a function to display an attached comment when the attached comment is included in an image file included in the web page and the attached comment is related to the personal information.

14. The program according to claim 13, wherein the program displays the attached comment after displaying the image of the image file.

15. A browser that displays a web page, wherein the browser causes a computer or a mobile terminal to perform:
a function to read personal information stored in the computer or the mobile terminal operating the browser; and
a function to display an attached comment when the attached comment is included in an image file included in the web page and the attached comment is related to the personal information.

16. The browser according to claim 15, wherein the browser displays the attached comment after displaying the image of the image file.

17. A program added to a browser that displays a web page, wherein the program causes a computer or a mobile terminal to perform:
a function to read personal information stored in the computer or the mobile terminal operating the browser; and
a function to display product information when the product information is included in an image file included in the web page and the product information is related to the personal information.

18. The program according to claim 17, wherein the program displays the product information after displaying the image of the image file.

19. A browser that displays a web page, wherein the browser causes a computer or a mobile terminal to perform:
a function to read personal information stored in the computer or the mobile terminal operating the browser; and
a function to display product information when the product information is included in an image file included in the web page and the product information is related to the personal information.

20. The browser according to claim 19, wherein the browser displays the product information after displaying the image of the image file.

21. An image file including image data and an attached program executed in a browser, wherein the attached program causes a computer or a mobile terminal to perform:
a function to read information stored in the computer or the mobile terminal operating the browser; and
a function to display contents based on the read information.

22. The image file according to claim 21, wherein
the program
reads personal information stored on in the computer or the mobile terminal and
displays a message identified based on the personal information.

23. A program for generating an image file to be provided on the Web, wherein the program causes a computer or a mobile terminal to perform:
a function to capture an image to generate the image file including an attached data area;
a function to set an identifier of an image provider in the attached data area of the image file; and
a function to set an attached URL that specifies a hyperlink destination of the image file in the attached data area of the image file.

24. The program according to claim 23, wherein
the program further causes the computer or the mobile terminal to perform a function to access a seller's site of an image-captured product and acquire a URL of a product purchase page of the product on the seller's site, and
sets the URL of the product purchase page in the attached data area of the image file as the attached URL.

25. The program according to claim 23, wherein
the program further causes the computer or the mobile terminal to perform a function to access a seller's site of an image-captured product and acquire product information of the product on the seller's site, and
sets the acquired product information in the attached data area of the image file.

26. The program according to any one of claims 23 to 25, wherein the program further causes the computer or the mobile terminal to perform:
a function to launch an SNS application,
a function to set the image file as a posted image in the launched SNS application.
